# EUROPEAN PATENT SPECIFICATION

(11) **EP 3 483 229 B1**
(45) Date of publication and mention of the grant of the patent: **04.10.2023**
(21) Application number: 17836997.1
(22) Date of filing: 02.08.2017
(51) Int. Cl.: B32B 27/28, B32B 27/30, B32B 27/40, C09J 201/00, C09J 7/29, C08K 3/34, C08K 5/00

(54) **SUPPORT FILM FOR TAPE MATERIAL, TAPE MATERIAL, AND METHOD FOR PRODUCING SUPPORT FILM FOR TAPE MATERIAL**
TRÄGERFOLIE FÜR BANDMATERIAL, BANDMATERIAL UND VERFAHREN ZUR HERSTELLUNG EINER TRÄGERFOLIE FÜR BANDMATERIAL
FILM DE SUPPORT DESTINÉ À UN MATÉRIAU EN BANDE, MATÉRIAU EN BANDE ET PROCÉDÉ DE PRODUCTION D'UN FILM DE SUPPORT DESTINÉ À UN MATÉRIAU EN BANDE

(30) Priority: 04.08.2016 JP 2016153932
(43) Date of publication of application: 15.05.2019
(73) Proprietor: Toppan Printing Co., Ltd., Tokyo 110-0016 (JP); Hisamitsu Pharmaceutical Co., Inc., Tosu-shi, Saga 841-0017 (JP)
(72) Inventor: SAKAIRI, Koji, Tokyo 110-0016 (JP); MATSUSHIMA, Atsushi, Tokyo 110-0016 (JP); SHINODA, Tomohiro, Tsukuba-shi Ibaraki 305-0856 (JP); SONOBE, Atsushi, Tsukuba-shi Ibaraki 305-0856 (JP)
(74) Representative: Prüfer & Partner mbB Patentanwälte · Rechtsanwälte
(86) International application number: PCT/JP2017/027982
(87) International publication number: WO 2018/025895

(56) References cited:
- EP-A1- 3 483 230
- WO-A1-2012/014587
- JP-A- H0 435 935
- JP-A- 2001 098 047
- JP-A- 2005 138 581
- JP-A- 2005 220 154
- JP-A- 2008 297 527
- JP-A- 2012 210 805
- JP-A- 2014 214 232

## Description

### TECHNICAL FIELD

The present invention relates to a support film for a tape material, a tape material using the support film for a tape material, and a method for producing a support film for a tape material.

### BACKGROUND ART

A tape material in which an adhesive layer is formed on one surface of a sheet-shaped or film-shaped support is widely used for various uses such as medical or industrial uses. The adhesive layer of such a tape material is mixed with a plasticizer in addition to an adhesive in some cases. Since it is considered that, depending on the material of the support, the plasticizer is adsorbed and thus effects of the tape material cannot be exhibited, plasticizer barrier properties are preferably imparted in at least a surface in contact with the adhesive layer in the support.

As a film material having plasticizer barrier properties, a support film for a tape material having a barrier layer disclosed in Patent Document 1, Patent Document 2, and Patent Document 3 is known. The support film for a tape material is provided with a barrier layer obtained by applying a barrier coating agent, in which montmorillonite, which is a layered inorganic compound, and polyvinyl alcohol, which is a water-soluble polymer, are mixed with each other on one surface of a film-shaped support formed of polyurethane.

### PRIOR ART DOCUMENTS

### PATENT DOCUMENTS

[Patent Document 1] Pamphlet of PCT International Publication No. WO2012/014585
[Patent Document 2] Pamphlet of PCT International Publication No. WO2012/014587
[Patent Document 3] Pamphlet of PCT International Publication No. WO2013/111773

In the support film for a tape material disclosed in the Patent Documents, a barrier layer, which can favorably maintain plasticizer barrier properties even in a case where the support film for a tape material is elongated, is formed on a support.

### SUMMARY OF THE INVENTION

### PROBLEMS TO BE SOLVED BY THE INVENTION

For example, if water vapor barrier properties of a support film for a tape material are improved in a patch in which an adhesive containing a drug is used on an adhesive layer, an effect of occlusive dressing therapy (ODT) becomes high, and an absorption rate of the drug into the skin can be enhanced. In addition, other various uses are considered.

In a case where a rubber material is used in the adhesive, water vapor barrier properties of the rubber material itself are high, and water vapor barrier properties are not required in the support film for a tape material. However, in a case where an acrylic material or silicone material is used in the adhesive, water vapor barrier properties are lower than those of the rubber material, and water vapor barrier properties are required in the barrier layer of the support film for a tape material in order to enhance the effects of ODT and the like.

On the other hand, the plasticizer barrier properties described above are also required in the barrier layer.

The present invention is made in view of the above circumstances, and an object of the present invention is to provide a support film for a tape material that can favorably maintain plasticizer barrier properties and water vapor barrier properties, a tape material, and a method for producing a support film for a tape material.

### MEANS FOR SOLVING THE PROBLEMS

A support film for a tape material according to a first aspect of the present invention includes a film-shaped support formed of polyurethane, a barrier layer containing an aromatic isocyanate-based polyurethane and a layered inorganic compound and formed on one surface of the support, and an overcoat layer containing a polyvinyl alcohol or an ethylene-vinyl alcohol copolymer and an organometallic chelating agent.

The overcoat layer may be provided so as to come into contact with at least a portion of the barrier layer.

The organometallic chelating agent may be titanium lactate.

A tape material according to a second aspect of the present invention includes the support film for a tape material according to the aspect and an adhesive layer formed on the overcoat layer.

A method for producing a support film for a tape material according to a third aspect of the present invention prepares a film-shaped support formed of polyurethane, forms a barrier layer containing an aromatic isocyanate-based polyurethane and a layered inorganic compound on one surface of the support, and forms an overcoat layer containing a polyvinyl alcohol or an ethylene-vinyl alcohol copolymer and an organometallic chelating agent.

The overcoat layer may be formed so as to come into contact with at least a portion of the barrier layer, when forming the overcoat layer.

### Effects of Invention

According to the support film for a tape material and the tape material according to the aspects of the present invention, it is possible to favorably maintain water vapor barrier properties while retaining plasticizer barrier properties.

### BRIEF DESCRIPTION OF THE DRAWINGS

FIG. 1 is a sectional view of a tape material according to a first embodiment of the present invention in a thickness direction.
FIG. 2 is a sectional view of a modification example of the tape material according to the first embodiment of the present invention in the thickness direction.
FIG. 3 is a view showing a procedure of an experiment examining plasticizer barrier properties of a barrier layer.
FIG. 4 is a view showing a procedure of an experiment examining plasticizer barrier properties of the barrier layer.
FIG. 5 is a graph showing a relationship between a type of a layered inorganic compound and a water vapor permeability rate.
FIG. 6 is a view showing a procedure of an experiment examining elongation resistance of the barrier layer.
FIG. 7 is a graph showing a relationship between a ratio of a layered inorganic compound and a polyhydric alcohol and a water vapor permeability rate.
FIG. 8 is a graph showing a relationship between a type of an organometallic chelating agent and a water vapor permeability rate.
FIG. 9 is a graph showing a relationship between an addition amount of a titanium lactate and a water vapor permeability rate.
FIG. 10 is a graph showing a relationship between a type of a layered inorganic compound and a water vapor permeability rate.

### EMBODIMENTS FOR CARRYING OUT THE INVENTION

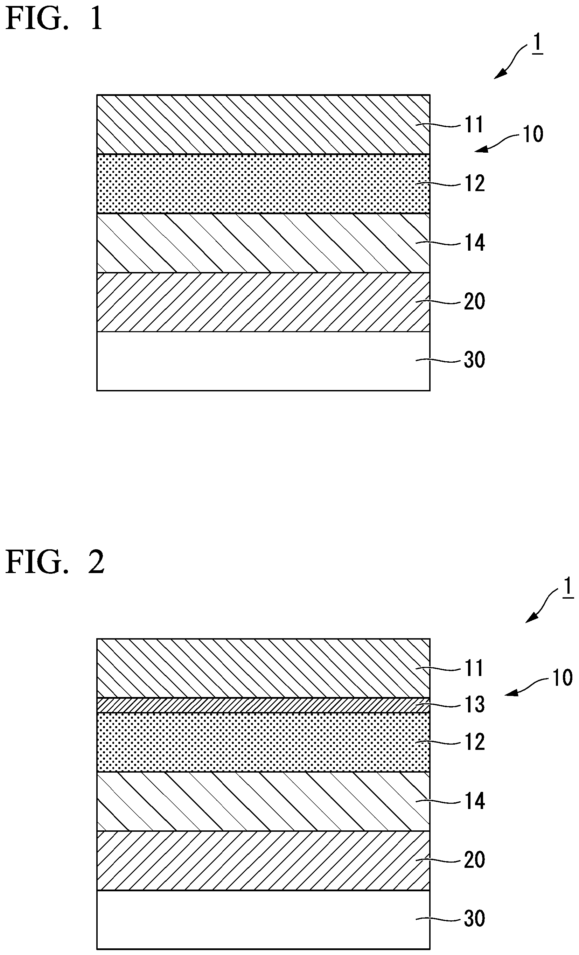

Hereinafter, the tape material according to the first embodiment of the present invention will be described with reference to FIGS. 1 to 10.

The tape material according to the present embodiment is constituted to include a support film for a tape material (hereinafter, simply referred to as "support film") according to the present embodiment, and can be used as an adhesive tape and the like in various fields such as for industrial use, for packaging use, for protective use, for labeling use, for masking use, for sanitary material such as paper diapers, for medical use such as sticking plaster and thermal administration, for cosmetic use, and for domestic use.

FIG. 1 is a sectional view of a tape material 1 according to the present embodiment in a thickness direction. The tape material 1 includes a support film 10, an adhesive layer 20 formed on one surface of the support film 10, and a release member 30 covering the adhesive layer.

The support film 10 includes a support 11 containing polyurethane and formed in a film shape, a barrier layer 12 formed on one surface of the support 11, and an overcoat layer 14.

In the support 11, polyurethane having flexibility is formed in a film shape. In the present embodiment, polyurethane forming the support 11 is not particularly limited. Materials used in the conventional polyurethane film can be used, and can be appropriately used depending on the use. Examples thereof include polyether-based polyurethane, polyester-based polyurethane, polycarbonate-based polyurethane, and the like. For use requiring water resistance, polyether-based polyurethane or polycarbonate-based polyurethane is preferable.

In addition, the type of isocyanate forming a urethane bond, the yellowing type, the non-yellowing type, or the like is not limited to a specific polyurethane, and can be appropriately selected depending on the use, the storage period or method when used, the type of used plasticizer, and the like.

The barrier layer 12 contains polyurethane and a layered inorganic compound and is formed on one surface of the support 11. As the polyurethane, polyurethane of a water-based material which is coatable to the support 11 containing polyurethane having low resistance with respect to a solvent or a plasticizer can be used. Among the water-based polyurethane, water-based polyurethane of gas barrier type (having gas barrier properties) is appropriate from the viewpoint of plasticizer barrier properties and water vapor barrier properties, and aromatic isocyanate-based polyurethane is particularly appropriate. The aromatic isocyanate-based polyurethane is polyurethane formed of isocyanate including an aromatic group on a main chain or side chain and polyol. The isocyanate including an aromatic group on a main chain or a side chain may form a part or the entirety of isocyanate forming aromatic isocyanate-based polyurethane. The aromatic isocyanate-based polyurethane can form a dense film.

As the layered inorganic compound, synthetic mica is preferable. In addition, montmorillonite or kaolinite, vermiculite, mica, and the like can be used. It is considered that the layered inorganic compound exhibits water vapor barrier properties due to a labyrinthine effect by laminating a layered inorganic compound having a flat structure when forming the barrier layer 12. A layered inorganic compound having a large particle diameter and a large aspect ratio is preferable for enhancing water vapor barrier properties.

In addition, by using an aromatic isocyanate-based polyurethane in which the layered inorganic compound is added to the barrier layer 12, it is possible to improve plasticizer barrier properties and water vapor barrier properties.

In the layered inorganic compound used in the barrier layer 12 according to the present embodiment, it is preferable that an average particle diameter be 0.1 µm or greater and an aspect ratio be 100 or greater.

In addition, in the layered inorganic compound used in the barrier layer 12, it is preferable that an average particle diameter be 3 µm or greater and an aspect ratio be 100 or greater.

In the present embodiment, the average particle diameter and the aspect ratio are measured by using a laser diffraction-scattering-type particle diameter distribution measurement device.

The barrier layer 12 is formed of a coating film constituted of a mixture of an aromatic isocyanate-base polyurethane and a layered inorganic compound, and if cracks occur at the time of elongation of the tape material 1, plasticizer barrier properties and water vapor barrier properties are deteriorated. In order to prevent the occurrence of cracks of the barrier layer 12 at the time of elongation of the tape material 1, a polyhydric alcohol is preferably added to the barrier layer 12. As the polyhydric alcohol, glycerin, ethylene glycol, propylene glycol, polyethylene glycol, and the like can be used. Among these, glycerin can be appropriately used. In order to impart elongation resistance to the barrier layer 12, it is preferable to increase an addition amount of the polyhydric alcohol in the barrier layer 12.

On the other hand, in a case where the addition amount of the polyhydric alcohol in the barrier layer 12 is increased, water vapor barrier properties tend to be deteriorated. Desired elongation resistance or water vapor barrier properties vary by use aspects of the tape material, but the addition amount of the polyhydric alcohol is preferably within a range of equal to or more than 5 wt% and equal to or less than 30 wt% with respect to a total amount (100 wt%) of an aromatic isocyanate-based polyurethane and a layered inorganic compound.

The overcoat layer 14 is formed to include polyvinyl alcohol or ethylene-vinyl alcohol copolymer (EVOH), which is a water-soluble polymer compound, and an organometallic chelating agent. The overcoat layer 14 significantly improves water vapor barrier properties of the support film 10 by being used with the barrier layer 12.

It is possible to improve water resistance by cross-linking the polyvinyl alcohol or ethylene-vinyl alcohol copolymer with the organometallic chelating agent.

For example, a polyvinyl alcohol solution is applied and dried on a substrate to form a layer constituted of polyvinyl alcohol on the substrate. If the substrate including the layer constituted of polyvinyl alcohol is impregnated in a bath at 40°C, polyvinyl alcohol is dissolved in approximately 30 minutes.

On the other hand, a polyvinyl alcohol aqueous solution added with an organometallic chelating agent is applied and dried to form a layer constituted of the organometallic chelating agent and polyvinyl alcohol on the substrate. Even if the substrate including the layer constituted of the organometallic chelating agent and the polyvinyl alcohol is impregnated in the bath at 40°C, an aspect in which the polyvinyl alcohol is dissolved is not observed. It is considered that the cause of this phenomenon is that water resistance is improved by the organometallic chelating agent.

The same phenomenon is also observed by the overcoat layer 14 in which the ethylene-vinyl alcohol copolymer and the organometallic chelating agent are used.

As the organometallic chelating agent, titanium lactate, zirconium ammonium carbonate, or zirconium oxynitrate; zirconyl chloride compound, zirconium lactate ammonium salt, zirconium acetate, or zirconium sulfate, which is a water-soluble zirconium compound; titanium lactate ammonium salt, titanium diisopropoxy bis(triethanol aminate), titanium diethanol aminate, or titanium aminoethyl aminoethanolate, which is a water-soluble titanium compound, is applicable.

In addition, a part of the organometallic chelating agent cross-links the polyvinyl alcohol or ethylene-vinyl alcohol copolymer and further improves water vapor barrier properties by interacting with a material of the barrier layer 12 with which at least a portion of the overcoat layer 14 comes into contact.

For example, if the organometallic chelating agent dispersion is dropped in a synthetic mica dispersion, which is a layered inorganic compound, the synthetic mica in the dispersion is aggregated. In addition, if the organometallic chelating agent dispersion is dropped in a water-based polyurethane dispersion, the water-based polyurethane dispersion is aggregated and gelated. From this phenomenon, it is considered that the organometallic chelating agent improves water vapor barrier properties by acting with the layered inorganic compound and polyurethane contained in the barrier layer 12.

Here, an order of forming the barrier layer 12 and the overcoat layer 14 is not limited. Another layer may be provided between the barrier layer 12 and the overcoat layer 14. In addition, the overcoat layer 14 may be formed after forming the barrier layer 12, and the barrier layer 12 may be formed after forming the overcoat layer 14. In order for the barrier layer 12 and the overcoat layer 14 to interact with each other, it is more preferable that the overcoat layer 14 be laminated such that a part of the overcoat layer 14 comes into contact with the barrier layer 12. In addition, in order for the barrier layer 12 and the overcoat layer 14 to interact with each other, it is more preferable that after forming the barrier layer 12, an overcoat layer coating liquid be directly applied on the barrier layer 12 to form the overcoat layer 14.

The adhesive layer 20 is formed by mixing a plasticizer on an adhesive substrate, and is formed in the overcoat layer 14 by being applied on a surface opposite to the surface provided with the barrier layer 12.

The adhesive used in the adhesive layer 20 is not particularly limited. As the adhesive, rubber-based polymer such as natural rubber, synthetic isoprene rubber, reclaimed rubber, styrene butadiene rubber (SBR), styrene-isoprene-styrene block copolymer (SIS), styrene-butadiene-styrene block copolymer (SBS), polyisobutylene, SEBS, and SEPS, acrylic polymer such as (meth)acrylic ester copolymer having (meth)acrylic esters as main monomers, silicone-based polymer such as silicone rubber, silicone resin, dimethyl siloxane, and diphenyl siloxane, and various materials such as polyvinyl ether-based material, polyvinyl ester-based material, EVA-based material, and polyester-based material can be used.

The plasticizer is not particularly limited, and various plasticizers such as petroleum-based oil (paraffin-based process oil, naphthenic process oil, aromatic process oil, and the like), dibasic acid ester (dibutyl phthalate, dioctyl phthalate, and the like), liquid rubber (polybutene, liquid isoprene, liquid polyisobutylene, and the like), vegetable oil-based (castor oil, tall oil, and the like), liquid fatty acid esters (isopropyl myristate, hexyl laurate, diethyl sebacate, sebacic acid diisopropyl, and the like), triacetin, sorbitan fatty acid esters, sucrose fatty acid esters, fatty acid glycerin esters, surfactants, and the like can be used.

In addition, various tackifiers may be mixed to enhance adhesion. For example, rosin-based resin such as rosin, modified rosin, rosin ester, and the like, terpene-based resin such as terpene resin, aromatically modified terpene resin, hydrogenated terpene resin, terpene phenol resin, and the like, petroleum resin such as aliphatic petroleum resin, aromatic petroleum resin, copolymeric petroleum resin, hydrogenated petroleum resin, DCPD-based petroleum resin, and the like, styrene-based resin, substituted styrene-based resin, xylene resin, phenol-based resin, chroman indene resin, and the like can be exemplified.

In addition, depending on the use of the tape material, an anti-oxidant, a filler, a cross-linking agent, an ultraviolet-absorbing agent, a colorant, a flame retardant, a conducting agent, a foaming agent, and the like may be added thereto.

In a case where the support film 10 is used in a patch including a drug on the adhesive layer 20, it is appropriately prevent the drug from reaching the support 11 by the barrier layer 12.

The release member 30 is a member that protects an adhesive surface of the adhesive layer 20 until pasting to a subject, and various types of known release paper and the like can be appropriately used. In a case where the tape material 1 is wound around a core material in a roll shape, the release member 30 may not be necessarily provided.

As shown in FIG. 2, the support film 10 may form an undercoat layer 13 between the support 11 and the barrier layer 12. The undercoat layer 13 can be used for various uses. For example, a layer on which a pattern or the like is printed can be formed as the undercoat layer 13, and can be used for adding a pattern or letter to the support film 10. The undercoat layer 13 may be entirely formed between the support 11 and the barrier layer 12, and may be formed in a pattern shape. An aqueous ink and the like can be used in formation of the undercoat layer 13.

Next, a method for producing the support film 10 will be described.

First, a support 11 formed of polyurethane is prepared (support preparation step). Next, a barrier layer coating liquid is applied on one surface of the support 11, and dried to form a barrier layer 12 (barrier layer formation step). The barrier layer coating liquid contains aromatic isocyanate-based polyurethane and a layered inorganic compound, and water is used as a dispersion medium (barrier layer formation step). In addition, the barrier layer coating liquid can preferably contain a polyhydric alcohol such as glycerin. In addition, various additives such as an emulsifier and dispersant may be further contained in the barrier layer coating liquid. In addition, as the dispersion medium, alcohol and the like other than water may be contained. On a surface opposite to the surface where the barrier layer 12 is in contact with the support film 10, an overcoat layer 14 is formed (overcoat layer formation step).

Here, an order of forming the barrier layer 12 and the overcoat layer 14 is not limited. Another layer may be provided between the barrier layer 12 and the overcoat layer 14. In addition, the overcoat layer 14 may be formed after forming the barrier layer 12, and the barrier layer 12 may be formed after forming the overcoat layer 14. In order for the barrier layer 12 and the overcoat layer 14 to interact with each other, it is more preferable that the overcoat layer 14 be laminated such that at least a portion of the overcoat layer 14 comes into contact with the barrier layer 12. In addition, in order for the barrier layer 12 and the overcoat layer 14 to interact with each other, it is more preferable that after forming the barrier layer 12, an overcoat layer coating liquid be directly applied on the barrier layer 12 to form the overcoat layer 14.

In the above manner, the support film 10 according to the present embodiment is completed.

In the method for producing the support film 10 according to the present embodiment, an undercoat layer formation step of forming the undercoat layer 13 may be further provided between the support preparation step and the barrier layer formation step.

If the overcoat layer 14 is formed to come into contact with at least a portion of the barrier layer 12, the interaction between the barrier layer 12 and the overcoat layer 14 can be exhibited. Even in a case where another layer, for example, an undercoat layer 13 or a mesh-shaped layer is included in a portion between the barrier layer 12 and the overcoat layer 14, if the overcoat layer 14 is laminated to come into contact with at least a portion of the barrier layer 12, the interaction between the barrier layer 12 and the overcoat layer 14 can be exhibited.

Next, experiments and experiment results in relation to the effect of each layer in the support film 10 will be described.

### (Experiment 1 Examination of polyurethane used in barrier layer)

### (1-1 Sample preparation)

As candidates of polyurethane used in the barrier layer, three types of an aromatic isocyanate-based polyurethane, which is a water-based polyurethane having gas barrier properties, a polyester-based urethane-modified polyol, and a self-cross-linking polyurethane containing a silanol group in the skeleton were selected.

As the water-based polyurethane having gas barrier properties, two types of samples of Sample I and Sample II were prepared. Both of Sample I and Sample II are water-based polyurethane having gas barrier properties, but each has a different composition. As the polyester-based urethane-modified polyol, three types of samples of Sample III to Sample V were prepared. All of Sample III to Sample V are polyurethane obtained by using polyester-based urethane-modified polyol, and are not aromatic isocyanate-based polyurethane. In addition, each sample of Sample III to Sample V has a different composition. As the self-cross-linking polyurethane containing a silanol group in the skeleton, two types of samples of Sample VI and Sample VII were prepared. Sample VI and Sample VII are self-cross-linking polyurethane containing a silanol group in the skeleton, and are not aromatic isocyanate-based polyurethane. In addition, each of Sample VI and Sample VII has a different composition.

In addition, as the barrier layer, two types of a barrier layer of a single polyurethane layer and a barrier layer formed of polyurethane to which 10 wt% of synthetic mica was added were prepared. The barrier layer formed of polyurethane to which 10 wt% of synthetic mica was added is a barrier layer including 10 wt% of synthetic mica and 90 wt% of polyurethane (solid content).

The barrier layer 12 was applied and formed on the support such that a solid content of coating liquid was 2.0 g/m².

As the support 11, a polyether-based polyurethane support having a thickness of 20 µm was used. As the synthetic mica, a synthetic mica having an average particle diameter of 11 µm and an aspect ratio of 1000 or greater was used.

In Experiment 1 and the following experiments, a method for measuring an average particle diameter and an aspect ratio of synthetic mica, colloidal silica, montmorillonite, and the like uses a laser diffraction scattering particle diameter distribution measurement device.

Using the samples, two types of evaluations of plasticizer barrier evaluation and water vapor barrier properties evaluation were performed. The two types of evaluations were independently performed by using different evaluation pieces.

### (1-2 Experiment procedure)

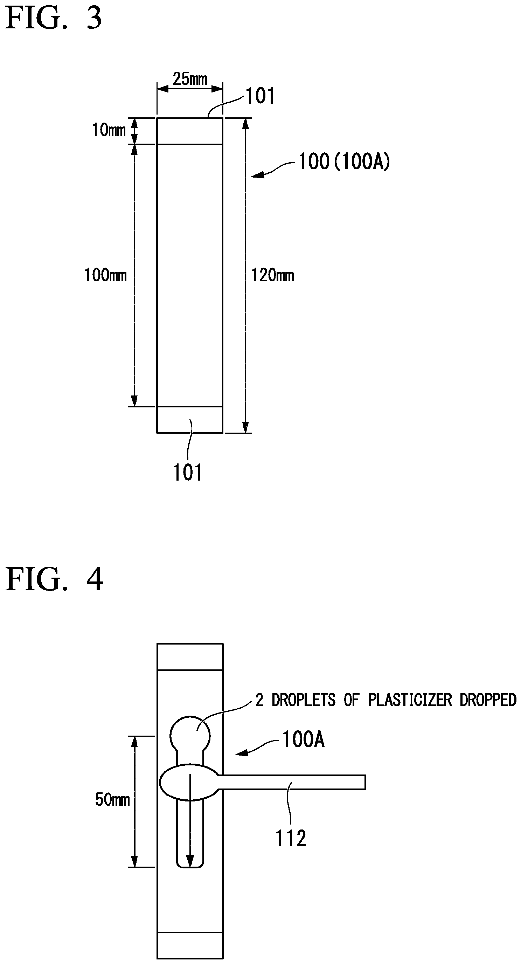

In the plasticizer barrier evaluation, three types of prepared samples 100 were cut in a size of 25 mm × 120 mm as shown in FIG. 3, and a sample piece 100A was disposed such that a barrier layer was on an upper side on a black acrylic plate in which scales were described, and an end of the sample piece 100A was fixed with an adhesive tape 101. Next, without performing elongation with respect to the evaluation piece 100A, the other end of the evaluation piece 100A was fixed on the black acrylic plate with the adhesive tape 101. A dimension (length) of a portion not covered with the adhesive tape 101 in a longitudinal direction was 100 mm.

After attachment of each evaluation piece 100A to the acrylic plate, as shown in FIG. 4, two droplets (approximately 0.08 g) of a plasticizer were dropped on the evaluation piece 100A with a pipette, and the dropped plasticizer was spread to a length of 50 mm on the evaluation piece 100A by using a cotton swab 112. As the plasticizer, isopropyl myristate (IPM) was used. The plasticizer was wiped after being left for 30 minutes and after being left for 3 hours at room temperature, and a swelling degree of the support 11 was visually evaluated. As an index, presence or absence of wrinkles in the support 11 caused by swelling was used (2-stage evaluation: wrinkles due to swelling were not acknowledged: A, and wrinkles due to swelling were acknowledged: B).

In the water vapor barrier properties evaluation, measurement of a water vapor permeability rate (WVTR) was performed by "testing methods for determination of the water vapor transmission rate of moisture - proof packaging materials (dish method)" of JIS-Z0208 (1976).

Measurement was performed after standing still for 3 hours at 40°C and 90% RH (relative humidity) by a dish method using a jig having an opening diameter of 80 mm, and the measurement value was converted into a moisture permeability amount for 24 hours per 1 m² to obtain a water vapor permeability rate.

### (1-3 Result)

The result is shown in Table 1. As a result of evaluating plasticizer barrier properties, favorable characteristics were obtained in the aromatic isocyanate-based polyurethane, which is a water-based polyurethane having gas barrier properties.

In the water vapor barrier properties evaluation as well, favorable characteristics were obtained in the aromatic isocyanate-based polyurethane, which is a water-based polyurethane having gas barrier properties. In particular, it was shown that by adding 10 wt% of synthetic mica, which is a layered inorganic compound, to the layer, a further lower water vapor permeability rate can be maintained, and high water vapor barrier properties are exhibited.

From the above result, it was determined that by forming a barrier layer 12 with a mixture of the aromatic isocyanate-based polyurethane, which is a water-based polyurethane having gas barrier properties, and a synthetic mica, which is a layered inorganic compound, it is possible to obtain plasticizer barrier properties and water vapor barrier properties.

The result of the plasticizer barrier properties (no elongation) described in Table 1 is a result of evaluation after being left for 3 hours.

**[Table 1]**

| | | PLASTICIZER BARRIER EVALUATION (NO ELONGATION) | WATER VAPOR PERMEABILITY RATE (g/m² per day) | |
|---|---|---|---|---|
| | | | SINGLE LAYER (NO SYNTHETIC MICA) | ADDITION OF 10% OF SYNTHETIC MICA IN LAYER |
| I | WATER-BASED POLYURETHANE HAVING GAS BARRIER PROPERTIES | A | 550 | 217 |
| II | | A | 607 | 302 |
| III | POLYESTER-BASED URETHANE-MODIFIED POLYOL | B | 649 | 638 |
| IV | | B | 611 | 678 |
| V | | B | 632 | 519 |
| VI | SELF-CROSS-LINKING POLYURETHANE CONTAINING A SILANOL GROUP IN SKELETON | B | 628 | 550 |
| VII | | B | 590 | 489 |

Next, an experiment was performed to evaluate water vapor barrier properties due to the type of the layered inorganic compound contained in the barrier layer 12 and the experiment result will be described.

### (Experiment 2 Examination in relation to a layered inorganic compound)

### (2-1 Sample preparation)

As a barrier layer on a support, three types of samples of a single polyurethane layer not containing a layered inorganic compound, a barrier layer formed of polyurethane to which 15 wt% of synthetic mica was added, and a barrier layer formed of polyurethane to which 15 wt% of colloidal silica was added were prepared. Here, the barrier layer formed of polyurethane to which 15 wt% of synthetic mica was added is a barrier layer formed such that the synthetic mica is 15 wt% and polyurethane is 85 wt% (solid content).

In addition, the barrier layer formed of polyurethane to which 15 wt% of colloidal silica was added is a barrier layer formed such that the colloidal silica is 15 wt% and polyurethane is 85 wt% (solid content).

The barrier layers were applied and formed on the support such that the solid content of a coating liquid was 2.0 g/m².

As the support 11, a polyether-based polyurethane support having a thickness of 20 µm was used.

### (2-2 Experiment procedure)

An experiment procedure of water vapor barrier properties is the same as that of Experiment 1.

### (2-3 Result)

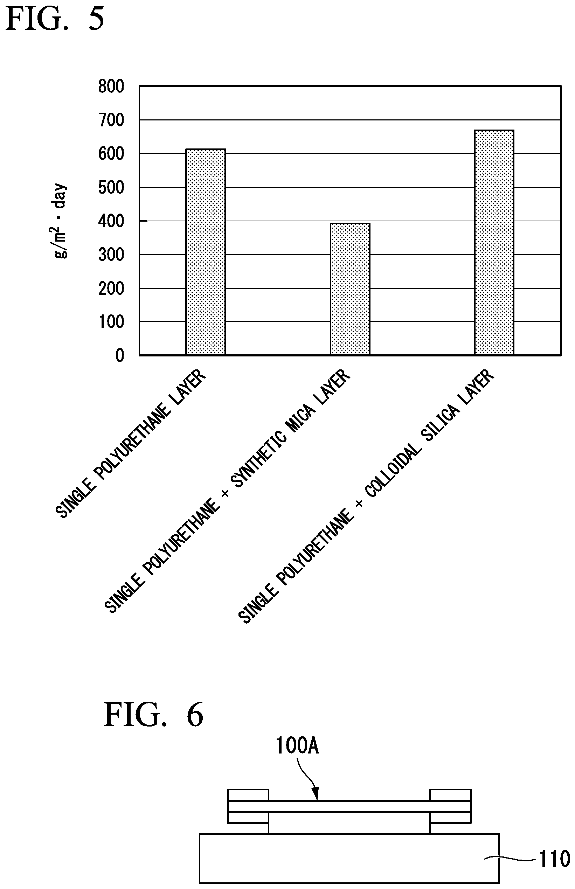

The result is shown in FIG. 5. The ordinate axis of the graph of FIG. 5 shows a water vapor permeability rate. In the barrier layer using a spherical mineral such as colloidal silica, the effect of improving water vapor barrier properties was small, and in the barrier layer using synthetic mica, the effect of improving water vapor barrier properties was determined. Table 2 shows average particle diameters and aspect ratios of the used synthetic mica and colloidal silica. It is considered that the synthetic mica has better water vapor barrier properties than the colloidal silica since the water vapor barrier properties are affected by a difference in aspect ratios. In addition, it is considered that the water vapor barrier properties were also affected by the average particle diameter, and the one having a large average particle diameter had favorable water vapor barrier properties. It is considered that the labyrinthine effect due to a layered inorganic compound such as a synthetic mica contributes to the result.

Therefore, it is considered that besides the synthetic mica, natural mica and montmorillonite, which are a layered inorganic compound, and the like can be also appropriately used.

**[Table 2]**

| | AVERAGE PARTICLE DIAMETER (µm) | ASPECT RATIO |
|---|---|---|
| SYNTHETIC MICA | 11 | 1000< |
| COLLOIDAL SILICA | 0.2 | 1 |

Next, the experiment result in which elongation resistance of the barrier layer 12 due to a polyhydric alcohol was examined is shown.

### (Experiment 3 Examination of elongation resistance imparting effect of barrier layer due to a polyhydric alcohol)

### (3-1 Sample preparation)

A sample of polyurethane containing 10 wt% of synthetic mica without adding glycerin was prepared as a reference (referred to as Control in the table), and samples of Samples 1A containing 10 wt% of synthetic mica, Samples 2A containing 15 wt% of synthetic mica, and Samples 3A containing 20 wt% of synthetic mica were prepared. Three types of variation samples in which a content ratio (wt%) of glycerin was changed in respective Samples 1A to 3A were prepared. Here, Control is a sample in which 10 wt% of synthetic mica and 90 wt% of polyurethane were formed on a barrier layer 12. Samples 1A are samples obtained by adding glycerin such that a proportion of glycerin is 5 wt% to 12.5 wt% with respect to 10 wt% of synthetic mica and 90 wt% of polyurethane (a total of 100 wt%) to form a barrier layer 12. Samples 2A are samples obtained by adding glycerin such that a proportion of glycerin is 10 wt% to 15 wt% with respect to 15 wt% of synthetic mica and 85 wt% of polyurethane (a total of 100 wt%) to form a barrier layer 12. Samples 3A is samples obtained by adding glycerin such that a proportion of glycerin is 10 wt% to 15 wt% with respect to 20 wt% of synthetic mica and 80 wt% of polyurethane (a total of 100 wt%) to form a barrier layer 12.

The barrier layer 12 was applied and formed on a support such that a solid content of a coating liquid was 2.0 g/m².

As the support 11, a polyether-based polyurethane support having a thickness of 20 µm was used. As the synthetic mica, a synthetic mica having an average particle diameter of 11 µm and an aspect ratio of 1000 or greater was used.

On the barrier layer, an overcoat layer 14 constituted of 80 wt% of polyvinyl alcohol and 20 wt% of titanium lactate is formed. The overcoat layer 14 was applied and formed on the barrier layer such that a solid content of the coating liquid was 2.0 g/m².

### (3-2 Experiment procedure)

As shown in FIG. 3, the prepared sample was cut in a size of 25 mm × 120 mm to prepare an evaluation piece.

On a black acrylic plate in which scales were described, the sample piece was disposed such that the barrier layer 12 was on an upper side, and an end of the sample piece was fixed with an adhesive tape. Next, as shown in FIG. 6, while elongating the evaluation piece by 20% in a longitudinal direction, the other end of the evaluation piece 100A was fixed on the black acrylic plate 110 with the adhesive tape. A dimension (length) of a portion not covered with the adhesive tape in a longitudinal direction was 100 mm before elongation, and a dimension (length) of a portion not covered with the adhesive tape fixed onto the acrylic plate 110 by 20% of elongation was 120 mm.

After attachment of each evaluation piece 100A to the acrylic plate 110, as shown in FIG. 4, two droplets (approximately 0.08 g) of a plasticizer were dropped on the evaluation piece with a pipette in a state of 20% of elongation, and the dropped plasticizer was spread to a length of 50 mm on the evaluation piece 100A by using a cotton swab 112. As the plasticizer, isopropyl myristate (IPM) was used. The plasticizer was wiped after being left for 30 minutes and after being left for 3 hours at room temperature, and a swelling degree of the support was visually evaluated. As an index, presence or absence of wrinkles in the support 11 caused by swelling was used (2-stage evaluation: wrinkles due to swelling were not acknowledged: A, and wrinkles due to swelling were acknowledged: B).

In addition, in a state where the evaluation piece 100A was not elongated as well, plasticizer barrier properties were evaluated. The evaluation piece 100A was attached to the acrylic plate without being elongated, two droplets (approximately 0.08 g) of a plasticizer were dropped on the evaluation piece 100A with a pipette in a non-elongated state, and the dropped plasticizer was spread to a length of 50 mm on the evaluation piece 100A by using a cotton swab 112. As the plasticizer, isopropyl myristate (IPM) was used. The plasticizer was wiped after being left for 30 minutes and after being left for 3 hours at room temperature, and a swelling degree of the support 11 was visually evaluated. The index is the same as described above (2-stage evaluation: wrinkles due to swelling were not acknowledged: A, and wrinkles due to swelling were acknowledged: B).

### (3-3 Result)

The result is shown in Table 3. In a reference (Control) in which glycerin was not added, it was determined that plasticizer barrier properties are present in a state where the evaluation piece 100A was not elongated. However, plasticizer barrier properties at the time of elongation of the evaluation piece 100A in the reference (Control) could not be determined. On the other hand, elongation resistance (permeability of plasticizer IPM at the time of elongation) started to be exhibited in the evaluation piece 100A by adding 5 wt% or greater of glycerin, and the effect of elongation resistance became remarkable at 10 wt% or greater. In Samples 1A, 2A, and 3A in which 5 wt% or greater of glycerin was added, from the result in which the elongation resistance was obtained, it is considered that plasticizer barrier properties are accordingly present in a non-elongated state as well (wrinkles due to swelling were not acknowledged: index A).

**[Table 3]**

| | SAMPLE CONSTITUTION COMPOSITION | | NON-ELONGATED PLASTICIZER (IPM) PERMEABILITY | | PLASTICIZER (IPM) PERMEABILITY AT TIME OF 20% OF ELONGATION | |
|---|---|---|---|---|---|---|
| | SYNTHETIC MICA RATIO(wt%) | GLYCERIN RATIO(wt%) | 30min. | 3hr | 30min. | 3hr |
| CONTROL | 10 | - | A | A | B | B |
| SAMPLE 1A | 10 | 5 | (NOT MEASURED) | (NOT MEASURED) | A | B |
| | 10 | 10 | (NOT MEASURED) | (NOT MEASURED) | A | A |
| | 10 | 12.5 | (NOT MEASURED) | (NOT MEASURED) | A | A |
| SAMPLE 2A | 15 | 10 | (NOT MEASURED) | (NOT MEASURED) | A | A |
| | 15 | 12.5 | (NOT MEASURED) | (NOT MEASURED) | A | A |
| | 15 | 15 | (NOT MEASURED) | (NOT MEASURED) | A | A |
| SAMPLE 3A | 20 | 10 | (NOT MEASURED) | (NOT MEASURED) | A | B |
| | 20 | 12.5 | (NOT MEASURED) | (NOT MEASURED) | A | A |
| | 20 | 15 | (NOT MEASURED) | (NOT MEASURED) | A | A |

Next, an experiment result in which an influence of the barrier layer 12 on water vapor barrier properties due to a change of a ratio of a ployhydric alcohol and a layered inorganic compound was examined is shown.

### (Experiment 4 Examination of water vapor barrier properties of barrier layer due to ratio of additives)

### (4-1 Sample preparation)

Sample 1B containing 5 wt% of synthetic mica, Sample 2B containing 10 wt% of synthetic mica, Sample 3B containing 15 wt% of synthetic mica, and Sample 4B containing 20 wt% of synthetic mica were prepared. In Samples 3B and 4B, four types of variation samples obtained by changing a content ratio (wt%) of glycerin were prepared. Here, Sample 1B is a sample obtained by adding glycerin such that a proportion of glycerin is 10 wt% with respect to 5 wt% of synthetic mica and 95 wt% of polyurethane (a total of 100 wt%) to form a barrier layer 12. Sample 2B is a sample obtained by adding glycerin such that a proportion of glycerin is 10 wt% with respect to 10 wt% of synthetic mica and 90 wt% of polyurethane (a total of 100 wt%) to form a barrier layer 12.

Sample 3B is a sample obtained by adding glycerin such that a proportion of glycerin is 10 to 20 wt% with respect to 15 wt% of synthetic mica and 85 wt% of polyurethane (a total of 100 wt%) to form a barrier layer 12. Sample 4B is a sample obtained by adding glycerin such that a proportion of glycerin is 10 to 20 wt% with respect to 20 wt% of synthetic mica and 80 wt% of polyurethane (a total of 100 wt%) to form a barrier layer 12.

The barrier layer 12 was applied and formed on the support such that a solid content of a coating liquid was 2.0 g/m².

As the support 11, a polyether-based polyurethane support having a thickness of 20 µm was used. As the synthetic mica, a synthetic mica having an average particle diameter of 11 µm and an aspect ratio of 1000 or greater was used.

On the barrier layer, an overcoat layer 14 constituted of 80 wt% of polyvinyl alcohol and 20 wt% of titanium lactate is formed. The overcoat layer 14 was applied and formed on the barrier layer such that a solid content of the coating liquid was 2.0 g/m².

### (4-2 Experiment procedure)

An experiment procedure of water vapor barrier properties is the same as that of Experiment 1.

### (4-3 Result)

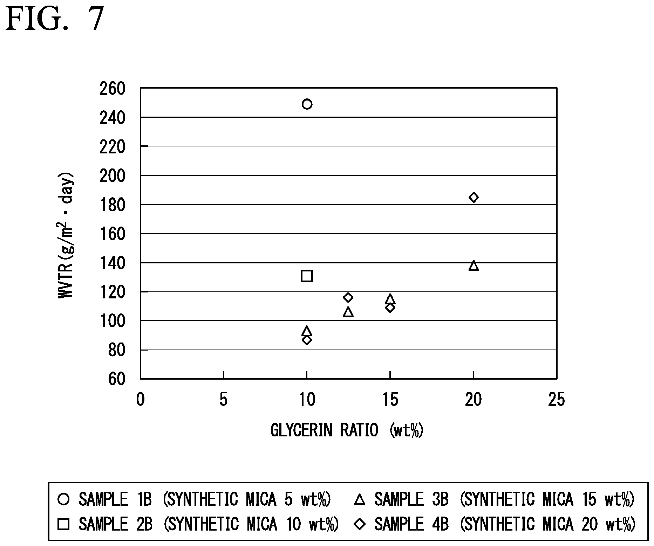

The result is shown in FIG. 7. From the results of water vapor permeability rates of Samples 1B, 2B, 3B, and 4B containing 10 wt% of glycerin, it was determined that the water vapor permeability rates (WVTR) were decreased by increasing the ratio of synthetic mica. However, even if the addition amount of the synthetic mica was increased such that the ratio of the synthetic mica was more than 15 wt%, a decrease of the water vapor permeability rate was not observed. It is considered that there is an upper limit in the addition amount of the synthetic mica that contributes to water vapor barrier properties.

In Samples 3B (15 wt% of synthetic mica) and 4B (20 wt% of synthetic mica), as a result of performing the experiment by changing the ratio of glycerin, it was determined that as the ratio of glycerin was increased, the water vapor permeability rate was increased.

From the results of Experiments 3 and 4, it is considered that if the addition amount of glycerin is increased, plasticizer barrier properties at the time of elongation are enhanced and water vapor barrier properties are decreased.

It is considered that the result of the water vapor permeability rate of Experiment 4 is lower than the results of the water vapor permeability rates of Experiments 1 and 2 since the water vapor permeability rate is affected by the overcoat layer 14 formed on the barrier layer.

Next, an experiment was performed to evaluate plasticizer barrier properties and water vapor barrier properties when laminating the overcoat layer 14 on the barrier layer 12 and the experiment result will be described.

### (Experiment 5 Evaluation of water vapor barrier properties when laminating overcoat layer on barrier layer)

### (5-1 Sample preparation)

Two basic samples of a sample obtained by forming only a support 11 and a sample obtained by forming a barrier layer on the support 11 were prepared. Regarding the barrier layer, four variations by combination of presence and absence of addition of synthetic mica and glycerin were prepared. In other words, as shown in Table 4, samples were prepared having five types of barrier layer constitutions including (1) a sample obtained by forming only a support 11 without a barrier layer, (2) a sample obtained by forming a barrier layer constituted of water-based polyurethane on the support 11, (3) a sample obtained by forming a barrier layer constituted of water-based polyurethane and synthetic mica on the support 11, (4) a sample obtained by forming a barrier layer constituted of water-based polyurethane and glycerin on the support 11, (5) a sample obtained by forming a barrier layer constituted of water-based polyurethane, synthetic mica, and glycerin on the support 11.

In addition, samples obtained by laminating an overcoat layer formed of polyvinyl alcohol, and samples obtained by laminating an overcoat layer 14 added with titanium lactate, on each of the samples having the barrier layer constitutions of (1) to (5) were prepared.

As the support 11, a polyether-based polyurethane support having a thickness of 20 µm was used.

The barrier layer was applied and formed on the support such that a solid content of a coating liquid was 2.0 g/m².

The overcoat layer was applied and formed on the barrier layer or the support layer such that a solid content of the coating liquid was 1.0 g/m².

In the sample obtained by adding synthetic mica of (3), a barrier layer 12 is formed at 85 wt% of polyurethane and 15 wt% of synthetic mica.

In the sample obtained by adding glycerin of (4), a barrier layer 12 is formed at 90 wt% of polyurethane and 10 wt% of glycerin.

In the sample obtained by adding synthetic mica and glycerin of (5), a barrier layer 12 is formed at 75 wt% of polyurethane, 15 wt% of synthetic mica, and 10 wt% of glycerin.

### (5-2 Experiment procedure)

An experiment procedure of plasticizer barrier properties is the same as that of Experiment 1 that evaluates IPM permeability. In addition, an experiment procedure of water vapor barrier properties is also the same as that of Experiment 1.

### (5-3 Result)

The result is shown in Table 4. Even if an overcoat layer is formed of only polyvinyl alcohol (in Table 4, described as PVA), improvement in water vapor barrier properties is low. In addition, even if an overcoat layer is laminated on a barrier layer not containing synthetic mica, which is a layered inorganic compound, the water vapor permeability rate is not much decreased.

On the other hand, in a case where a synthetic mica, which is a layered inorganiccompound, is added to the barrier layer, the water vapor permeability rate is significantly decreased, and by adding titanium lactate, which is an organometallic chelating agent, to the overcoat layer, it is possible to further decrease the water vapor permeability rate.

In Experiment 3, it was determined that elongation resistance was improved by adding glycerin which is a polyhydric alcohol to the barrier layer 12. In Experiment 5 as well, in which an overcoat layer was laminated on a barrier layer, it was possible to determine that elongation resistance was enhanced by adding glycerin.

In addition, it was determined that if only an overcoat layer is formed without forming a barrier layer, water vapor barrier properties were almost not enhanced. It is considered that the overcoat layer itself does not have a barrier function, and water vapor barrier properties are enhanced by interaction of the barrier layer and the overcoat layer.

**[Table 4]**

| | | NO OVERCOAT LAYER (SINGLE BARRIER LAYER) | | OVERCOAT LAYER CONSTITUTION | | | |
|---|---|---|---|---|---|---|---|
| | | | | PVA ONLY | | PVA + TITANIUM LACTATE | |
| | | WATER VAPOR PERMEABILITY RATE (g/m² per day) | ELONGATION RESISTANCE | WATER VAPOR PERMEABILITY RATE (g/m² per day) | ELONGATION RESISTANCE | WATER VAPOR PERMEABILITY RATE (g/m² per day) | ELONGATION RESISTANCE |
| BARRIER LAYER CONSTITUTION | (NO BARRIER LAYER) | - | - | (750) | | (720) | |
| | WATER-BASED POLYURETHANE | 569 | B | 558 | B | 519 | B |
| | WATER-BASED POLYURETHANE + SYNTHETIC MICA | 103 | B | 42 | B | 30 | B |
| | WATER-BASED POLYURETHANE + GLYCERIN | 644 | A | 638 | A | 587 | A |
| | WATER-BASED POLYURETHANE + SYNTHETIC MICA + GLYCERIN | 450 | A | 350 | A | 60 | A |

Next, an experiment was performed to evaluate water vapor barrier properties when changing the type of the organometallic chelating agent added to the overcoat layer 14 and the experiment result will be described.

### (Experiment 6 Examination in relation to organometallic chelating agent)

### (6-1 Sample preparation)

Four types of samples of a sample obtained by forming only a barrier layer 12 and not forming an overcoat layer 14, a sample obtained by laminating an overcoat layer 14 formed by adding titanium lactate to polyvinyl alcohol on a barrier layer 12, a sample obtained by laminating an overcoat layer 14 formed by adding zirconium ammonium carbonate to polyvinyl alcohol on a barrier layer 12, and a sample obtained by laminating an overcoat layer 14 formed by adding zirconium oxynitrate to polyvinyl alcohol were prepared. An addition amount of the organometallic chelating agent is 30% in a liquid weight of the organometallic chelating agent with respect to any of polyvinyl alcohol solid weights.

Barrier layers 12 of all samples are also formed of 75 wt% of polyurethane, 15 wt% of synthetic mica, and 10 wt% of glycerin.

As the support 11, a polyether-based polyurethane support having a thickness of 20 µm was used.

The barrier layer 12 was applied and formed on the support such that a solid content of a coating liquid was 2.0 g/m². The overcoat layer 14 was applied and formed on the barrier layer such that the solid content of the coating liquid was 1.0 g/m².

### (6-2 Experiment procedure)

An experiment procedure of water vapor barrier properties is the same as that of Experiment 1.

### (6-3 Result)

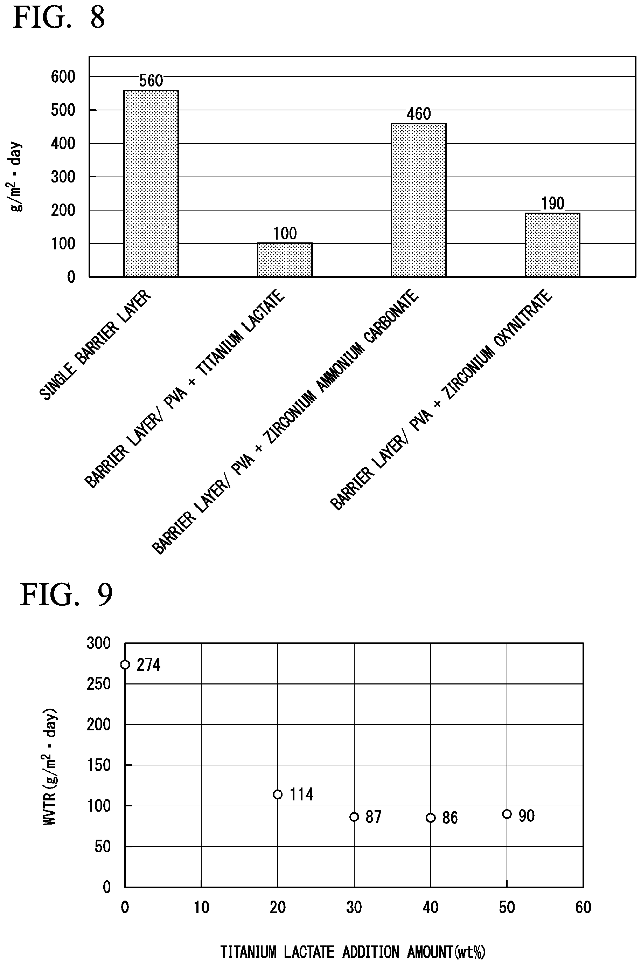

FIG. 8 shows a result of evaluation of water vapor barrier properties when changing the type of the organometallic chelating agent in the overcoat layer 14. It was determined that the water vapor permeability rate was decreased the most when adding titanium lactate known as a cross-linking agent of polyvinyl alcohol to the overcoat layer 14. In addition, it was determined that, also in a case where zirconium oxynitrate or zirconium ammonium carbonate was added to the overcoat layer 14, the water vapor permeability rate was decreased.

Next, an experiment was performed to evaluate water vapor barrier properties when changing an addition amount of the organometallic chelating agent added to the overcoat layer 14 and the result will be described.

### (Experiment 7 Examination in relation to addition amount of organometallic chelating agent)

### (7-1 Sample preparation)

A sample in which an overcoat layer was formed of only polyvinyl alcohol, and a sample in which an overcoat layer 14 was formed of polyvinyl alcohol added with titanium lactate were prepared.

There are four types of samples containing titanium lactate obtained by adding titanium lactate water dispersion such that the product weights of the titanium lactate water dispersion are 20 wt%, 30 wt%, 40 wt%, and 50 wt% with respect to a solid content weight of polyvinyl alcohol. The solid content proportion of the titanium lactate water dispersion is 44 wt%. Therefore, in the sample in which the product weight of the titanium lactate water dispersion is 20 wt% with respect to the solid weight of polyvinyl alcohol, 8.8 wt% of titanium lactate is contained with respect to 100 wt% of polyvinyl alcohol. Similarly, in the samples in which the product weights of the titanium lactate water dispersion are 30 wt%, 40 wt%, and 50 wt% with respect to the solid content weight of polyvinyl alcohol, the titanium lactate is contained in an amount of 13.2 wt%, 17.6 wt, and 22 wt%, respectively, with respect to 100 wt% of polyvinyl alcohol.

The barrier layers 12 of all samples are also formed of 75 wt% of polyurethane, 15 wt% of synthetic mica, and 10 wt% of glycerin.

As the support 11, a polyether-based polyurethane support having a thickness of 20 µm was used.

The barrier layer 12 was applied and formed on the support such that a solid content of a coating liquid was 2.0 g/m². The overcoat layer was applied and formed on the barrier layer such that the solid content of the coating liquid was 1.0 g/m².

### (7-2 Experiment procedure)

An experiment procedure of water vapor barrier properties is the same as that of Experiment 1.

### (7-3 Result)

FIG. 9 shows a result of evaluation of water vapor barrier properties when changing the addition amount of the organometallic chelating agent. The water vapor permeability rate can be decreased by increasing the addition amount of titanium lactate. However, even if the addition amount was increased by exceeding 30 wt%, a further decrease in the water vapor permeability rate was not observed. It is considered that there is an upper limit in the addition amount that contributes to water vapor barrier properties.

Next, an experiment was performed to evaluate water vapor barrier properties by the type of a layered inorganic compound contained in the barrier layer 12 obtained by laminating the overcoat layer 14 and the experiment result will be described. The same experiment as Experiment 2 was performed on the support film 10 obtained by laminating the overcoat layer 14.

### (Experiment 8 Examination of a layered inorganic compound)

### (8-1 Sample preparation)

As the barrier layer 12 on the support 11, three types of samples in which a barrier layer formed of polyurethane containing 15 wt% of synthetic mica, a barrier layer formed of polyurethane containing 15 wt% of montmorillonite, and a barrier layer formed of polyurethane containing 15 wt% of colloidal silica were prepared. On the barrier layer 12 of the sample, an overcoat layer 14 formed of polyvinyl alcohol added with titanium lactate is laminated.

As the support 11, a polyether-based polyurethane support having a thickness of 20 µm was used.

The barrier layer 12 was applied and formed on the support such that a solid content of a coating liquid was 2.0 g/m². The overcoat layer 14 was applied and formed on the barrier layer such that the solid content of the coating liquid was 1.0 g/m².

### (8-2 Experiment procedure)

An experiment procedure of water vapor barrier properties is the same as that of Experiment 1.

### (8-3 Result)

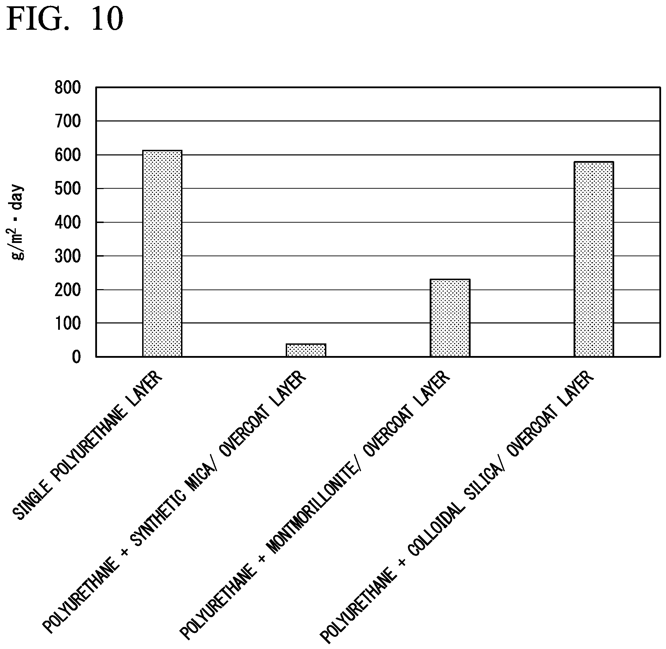

FIG. 10 shows the result. An ordinate axis of the graph of FIG. 10 shows a water vapor permeability rate. The result of the water vapor permeability rate of the sample obtained by forming a barrier layer with a single polyurethane layer without forming an overcoat layer 14 is the result of Experiment 2. In a case where any layered inorganic compound was added to the barrier layer, it was determined that the water vapor permeability rate was decreased more than that of the sample obtained by forming a barrier layer with a single polyurethane layer. In particular, it was determined that the water vapor permeability rate was decreased the most in the sample obtained by adding synthetic mica as the layered inorganic compound.

Table 5 shows average particle diameters and aspect ratios of the used synthetic mica and colloidal silica.

It is considered that the synthetic mica or montmorillonite has better water vapor barrier properties than the colloidal silica since the water vapor barrier properties are affected by a difference in aspect ratios. In addition, it is considered that the water vapor barrier properties were also affected by the average particle diameter, and the one having a large average particle diameter had favorable water vapor barrier properties. It is considered that the labyrinthine effect due to a layered inorganic compound such as a synthetic mica or montmorillonite contributes to the result.

**[Table 5]**

| | AVERAGE PARTICLE DIAMETER (µm) | ASPECT RATIO |
|---|---|---|
| SYNTHETIC MICA | 11 | 1000< (ASPECT RATIO EXCEEDS 1000) |
| MONTMORILLONITE | 0.2 TO 0.5 | 460 |
| COLLOIDAL SILICA | 0.2 | 1 |

Finally, an experiment was performed to evaluate plasticizer barrier properties in a case of changing the plasticizer used for evaluation of plasticizer barrier properties and the result will be described.

### (Experiment 9 Evaluation of plasticizer barrier properties due to difference in plasticizer)

### (9-1 Sample preparation)

A barrier layer 12 and an overcoat layer 14 were formed on the support 11 formed of polyurethane. The barrier layer 12 contains 78 wt% of polyurethane (water-based polyurethane having gas barrier properties using aromatic isocyanate), 12 wt% of synthetic mica, and 10 wt% of glycerin. In addition, the overcoat layer 14 contains 90 wt% of polyvinyl alcohol and 10 wt% of titanium lactate.

As the support 11, a polyether-based polyurethane support having a thickness of 20 µm.

The barrier layer 12 was applied and formed on the support such that a solid content of a coating liquid was 2.0 g/m². The overcoat layer 14 was applied and formed on the barrier layer such that the solid content of the coating liquid was 1.0 g/m².

As a sample for comparison, a support film 10 obtained by not forming the barrier layer 12 and not forming the overcoat layer 14 and formed of only polyurethane was prepared (hereinafter, referred to as "comparison sample").

### (9-2 Experiment procedure)

An experiment procedure of plasticizer barrier properties is the same as that of Experiment 3. In Experiment 3, only IPM (isopropyl myristate) was used as a plasticizer used for evaluation of plasticizer barrier properties, but in Experiment 9, in addition to this, triacetin (TA), glyceryl monoisostearate (MGIS), and sorbitan monooleate (SMO) were used. In addition, there were two elapse times for visual determining in the experiment, namely 30 minutes and 3 hours in Experiment 1. In Experiment 9, visual determining of the samples was performed in elapse times of 1 hour and 2 hours. Here, the elapse time represents an elapse time from after plasticizer application to surface observation.

### (9-3 Result)

Table 6 shows a result of the sample in which the barrier layer 12 and the overcoat layer 14 were formed. In addition, Table 7 shows a result of the comparison sample. As a result of the experiment, it could be determined that the support film 10 for a tape material according to the present embodiment has plasticizer barrier properties and elongation resistance (plasticizer barrier properties at the time of 20% elongation) with respect to not only isopropyl myristate (IPM) but also triacetin (TA), glyceryl monoisostearate (MGIS), and sorbitan monooleate (SMO).

In Table 7, the result of evaluation for the case where the elapse time is 1 hour or longer is indicated as "-" (not measured), but from the result of evaluation after elapse of 0.5 hours (30 minutes) is indicated as "B" (wrinkles due to swelling were acknowledged), it is obvious that the evaluation after the elapse time equal to or longer than this is indicated as "B".

**[Table 6]**

| | | PLASTICIZER | | | | | | | |
|---|---|---|---|---|---|---|---|---|---|
| | | ISOPROPYL MYRISTATE (IPM) | | TRIACETIN (TA) | | GLYCERYL MONOISOSTEARATE (MGIS) | | SORBITAN MONOOLEATE (SMO) | |
| | | NO ELONGATION | 20% ELONGATION | NO ELONGATION | 20% ELONGATION | NO ELONGATION | 20% ELONGATION | NO ELONGATION | 20% ELONGATION |
| ELAPSE TIME | 0.5 HOUR | A | A | A | A | A | A | A | A |
| | 1 HOUR | A | A | A | A | A | A | A | A |
| | 2 HOURS | A | A | A | A | A | A | A | A |
| | 3 HOURS | A | A | A | B | A | A | A | A |

**[Table 7]**

| | | PLASTICIZER | | | | | | | |
|---|---|---|---|---|---|---|---|---|---|
| | | ISOPROPYL MYRISTATE (IPM) | | TRIACETIN (TA) | | GLYCERYL MONOISOSTEARATE (MGIS) | | SORBITAN MONOOLEATE (SMO) | |
| | | NO ELONGATION | 20% ELONGATION | NO ELONGATION | 20% ELONGATION | NO ELONGATION | 20% ELONGATION | NO ELONGATION | 20% ELONGATION |
| ELAPSE TIME | 0.5 HOUR | B | B | B | B | B | B | B | B |
| | 1 HOUR | - | - | - | - | - | - | - | - |
| | 2 HOURS | - | - | - | - | - | - | - | - |
| | 3 HOURS | - | - | - | - | - | - | - | - |

### (Experiment 10 Examination in relation to a layered inorganic compound/ water vapor barrier properties)

### (10-1 Sample preparation)

Three types of samples of Sample 1C obtained by forming a barrier layer constituted of a single polyurethane layer not containing a layered inorganic compound on a support, Sample 2C obtained by forming a barrier layer in which 20 wt% of synthetic mica was added to 80 wt% of polyurethane on a support, and Sample 3C obtained by forming a barrier layer in which 20 wt% of montmorillonite was added to 80 wt% of polyurethane on a support were prepared.

The barrier layer according to Experiment 10 was applied and formed on the support such that a solid content of a coating liquid was 3.0 g/m².

As the support 11, a polyether-based polyurethane support having a thickness of 20 µm was used.

### (10-2 Experiment procedure)

An experiment procedure of water vapor barrier properties is the same as that of Experiment 1, and measurement of a water vapor permeability rate (WVTR) was performed by "testing methods for determination of the water vapor transmission rate of moisture - proof packaging materials (dish method)" of JIS-Z0208 (1976). Measurement was performed after standing still for 3 hours at 40°C and 90% RH (relative humidity) by a dish method using a jig having an opening diameter of 80 mm, and the measurement value was converted into a moisture permeability amount for 24 hours per 1 m² to obtain a water vapor permeability rate.

### (10-3 Result)

As a result in relation to water vapor barrier properties, the result shown in the following Table 8 was obtained.

**[Table 8]**

| | BARRIER LAYER CONSTITUTION | WATER VAPOR PERMEABILITY RATE (g/m² per day) |
|---|---|---|
| SAMPLE 1C | SINGLE POLYURETHANE LAYER | 504 |
| SAMPLE 2C | 80 wt% OF POLYURETHANE + 20 wt% OF SYNTHETIC MICA | 34 |
| SAMPLE 3C | 80 wt% OF POLYURETHANE + 20 wt% OF MONTMORILLONITE | 139 |

Even in a case where montmorillonite was used as a barrier layer material (a layered inorganic compound), instead of synthetic mica, favorable water vapor barrier properties were shown.

Average particle diameters and aspect ratios of the synthetic mica and montmorillonite used in this Experiment 10 are as shown in Table 9.

**[Table 9]**

| | AVERAGE PARTICLE DIAMETER (µm) | ASPECT RATIO |
|---|---|---|
| SYNTHETIC MICA | 11 | 1000< (ASPECT RATIO EXCEEDS 1000) |
| MONTMORILLONITE | 0.2 TO 0.5 | 460 |

It is considered that the synthetic mica has better water vapor barrier properties in a case of using synthetic mica than in a case of using montmorillonite since the water vapor barrier properties are affected by a difference in aspect ratios. In addition, it is considered that the water vapor barrier properties were also affected by the average particle diameter, and the one having a large average particle diameter had favorable water vapor barrier properties. It is considered that the labyrinthine effect due to a layered inorganic compound contributes to the result.

### (Experiment 11 Examination in relation to a layered inorganic compound/ plasticizer barrier properties)

### (11-1 Sample preparation)

Two types of samples of (1) Sample 1D obtained by forming a barrier layer on a support layer such that polyurethane is 80 wt% and montmorillonite is 20 wt% and (2) Sample 2D obtained by forming a barrier layer on a support such that polyurethane is 72 wt%, montmorillonite is 18 wt%, and glycerin is 10 wt% were prepared.

The barrier layer was applied and formed on the support such that a solid content of a coating liquid was 2.0 g/m².

In addition, an overcoat layer constituted of 80 wt% of polyvinyl alcohol and 20 wt% of titanium lactate was formed on the barrier layer.

By using the overcoat layer along with the barrier layer 12, water vapor properties of the support film 10 are enhanced.

The overcoat layer was applied and formed on the barrier layer such that the solid content of the coating liquid was 2.0 g/m².

As the support 11, a polyether-based polyurethane support having a thickness of 20 µm was used.

Average particle diameters and aspect ratios of the montmorillonite used in this Experiment 11 are as shown in the following Table 10.

**[Table 10]**

| | AVERAGE PARTICLE DIAMETER (µm) | ASPECT RATIO |
|---|---|---|
| MONTMORILLONITE | 0.2 TO 0.5 | 460 |

### (11-2 Experiment procedure)

In the plasticizer barrier evaluation, the prepared two types of samples 100 (Sample 1D, Sample 2D) were cut in a size of 25 mm × 120 mm as shown in FIG. 3, and a sample piece 100A was disposed such that a barrier layer was on an upper side on a black acrylic plate in which scales were described, and an end of the sample piece 100A was fixed with an adhesive tape.

Next, as shown in FIG. 6, while performing 10% and 20% of elongation with respect to the evaluation piece 100A in a longitudinal direction, the other end of the evaluation piece 100A was fixed on the black acrylic plate 110 with the adhesive tape. A dimension (length) of a portion not covered with the adhesive tape in the longitudinal direction was 100 mm.

After attachment of each evaluation piece 100A to the acrylic plate, as shown in FIG. 4, two droplets (approximately 0.08 g) of a plasticizer were dropped on the evaluation piece 100A with a pipette, and the dropped plasticizer was spread to a length of 50 mm on the evaluation piece 100A by using a cotton swab 112.

As the plasticizer, isopropyl myristate (IPM) was used.

The plasticizer was wiped after being left for 3 hours at room temperature, and a swelling degree of the support 11 was visually evaluated.

As an index, presence or absence of wrinkles in the support 11 caused by swelling was used (2-stage evaluation: wrinkles due to swelling were not acknowledged: A, and wrinkles due to swelling were acknowledged: B).

### (11-3 Result)

The result shown in the following Table 11 was obtained.

**[Table 11]**

| | BARRIER LAYER CONSTITUTION | PLASTICIZER BARRIER EVALUATION (10% ELONGATION) | PLASTICIZER BARRIER EVALUATION (20% ELONGATION) |
|---|---|---|---|
| SAMPLE 1D | POLYURETHANE + MONTMORILLONITE | A | B |
| SAMPLE 2D | POLYURETHANE + MONTMORILLONITE + GLYCERIN | A | A |

It was suggested that, even in a case where montmorillonite was used as a barrier layer material (a layered inorganic compound), instead of synthetic mica, by adding glycerin to the barrier layer, plasticizer barrier properties are enhanced.

### (Experiment 12 Examination in relation to overcoat material)

### (12-1 Sample preparation)

A sample (Sample 1E) obtained by laminating an overcoat layer 14 in which titanium lactate was added to polyvinyl alcohol on a barrier layer 12 and a sample (Sample 2E) obtained by laminating an overcoat layer 14 in which titanium lactate was added to ethylene-vinyl alcohol copolymer (EVOH) on a barrier layer 12 were prepared.

The barrier layers 12 of both of the samples of Samples 1E and 2E were also formed such that polyurethane is 75 wt%, synthetic mica is 15 wt%, and glycerin is 10 wt%.

Regarding the overcoat layer, in Sample 1E, an overcoat layer 14 constituted of 80 wt% of polyvinyl alcohol and 20 wt% of titanium lactate was formed.

In Sample 2E, an overcoat layer 14 constituted of 80 wt% of ethylene-vinyl alcohol copolymer (EVOH) and 20 wt% of titanium lactate was formed.

As the support 11, a polyether-based polyurethane support having a thickness of 20 µm was used.

The barrier layer 12 was applied and formed on the support such that a solid content of a coating liquid was 2.0 g/m².

The overcoat layer 14 was applied and formed on the barrier layer such that the solid content of the coating liquid was 1.0 g/m².

### (12-2 Experiment procedure)

An experiment procedure of water vapor barrier properties is the same as that of Experiment 1, and measurement of a water vapor permeability rate (WVTR) was performed by "testing methods for determination of the water vapor transmission rate of moisture - proof packaging materials (dish method)" of JIS-Z0208 (1976).

Measurement of WVTR of Sample 1E and Sample 2E was performed after standing still for 3 hours at 40°C and 90% RH (relative humidity) by a dish method using a jig having an opening diameter of 80 mm, and the measurement value was converted into a moisture permeability amount for 24 hours per 1 m² to obtain a water vapor permeability rate.

In the plasticizer barrier evaluation, two types of prepared samples 100 (Sample 1E and Sample 2E) were cut in a size of 25 mm × 120 mm as shown in FIG. 3, and a sample piece was disposed such that an overcoat layer was on an upper side on a black acrylic plate in which scales were described, and an end of the sample piece was fixed with an adhesive tape.

Next, without performing elongation with respect to the evaluation piece, the other end of the evaluation piece was fixed on the black acrylic plate with the adhesive tape.

A dimension of a portion not covered with the adhesive tape in a longitudinal direction was 100 mm.

After attachment of each evaluation piece to the acrylic plate, as shown in FIG. 4, two droplets (approximately 0.08 g) of a plasticizer were dropped on the evaluation piece 100A with a pipette, and spread to a length of 50 mm using a cotton swab 112.

As the plasticizer, isopropyl myristate (IPM) was used.

The plasticizer was wiped after being left for 3 hours at room temperature, and a swelling degree of the support 11 was visually evaluated.

### (12-3 Result)

The evaluation result is shown in the following Table 12.

**[Table 12]**

| | OVERCOAT LAYER CONSTITUTION | WATER VAPOR PERMEABILITY RATE (g/m² per day) | PLASTICIZER BARRIER EVALUATION (NO ELONGATION) |
|---|---|---|---|
| SAMPLE 1E | PVA + TITANIUM LACTATE | 62 | A |
| SAMPLE 2E | EVOH + TITANIUM LACTATE | 100 | A |

It was shown that even in a case where EVOH is used as the overcoat material, instead of PVA, favorable water vapor properties are shown. However, in comparison between Sample 1E using PVA as the overcoat material and Sample 2E using EVOH as the overcoat material, it was shown that Sample 1E shows more favorable water vapor barrier properties. In addition, the plasticizer barrier evaluation was favorable in the case of using EVOH instead of PVA (Sample 2E).

As described above, it is possible to maintain plasticizer barrier properties and favorably retaining water vapor barrier properties by providing the barrier layer 12 containing an aromatic isocyanate-based polyurethane and a layered inorganic compound and the overcoat layer 14 containing a polyvinyl alcohol or an ethylene-vinyl alcohol copolymer and an organometallic chelating agent in the support film 10 according to the present embodiment.

Hereinabove, the embodiment of the present invention was described, but the technical scope of the present invention is not limited to the above embodiment, and it is possible to change combination of the constituent elements of the embodiment within a range not departing from the scope of the claims, and to add or delete various changes to each constituent element of the above embodiment within a range not departing from the scope of the claims.

### DESCRIPTION OF REFERENCE NUMERAL

1 Tape material
10 Support film for tape material
11 Support
12 Barrier layer
13 Undercoat layer
14 Overcoat layer
20 Adhesive layer
30 Release member

## Claims

1. A support film for a tape material, comprising:
a film-shaped support formed of polyurethane;
a barrier layer containing an aromatic isocyanate-based polyurethane and a layered inorganic compound and formed on one surface of the support; and
an overcoat layer containing a polyvinyl alcohol or an ethylene-vinyl alcohol copolymer and an organometallic chelating agent.

2. The support film for a tape material according to Claim 1,
wherein the overcoat layer is provided so as to come into contact with at least a portion of the barrier layer.

3. The support film for a tape material according to Claim 1 or 2,
wherein the organometallic chelating agent is titanium lactate.

4. A tape material, comprising:
the support film for a tape material according to any one of Claims 1 to 3; and
an adhesive layer formed on the overcoat layer.

5. A method for producing a support film for a tape material, comprising:
preparing a film-shaped support formed of polyurethane;
forming a barrier layer containing an aromatic isocyanate-based polyurethane and a layered inorganic compound on one surface of the support; and
forming an overcoat layer containing a polyvinyl alcohol or ethylene-vinyl alcohol copolymer and an organometallic chelating agent.

6. The method for producing the support film for a tape material according to Claim 5, further comprising
forming the overcoat layer so as to come into contact with at least a portion of the barrier layer, when forming the overcoat layer.

## Patentansprüche

1. Eine Trägerfolie für ein Bandmaterial, umfassend:
einen aus Polyurethan gebildeten folienförmigen Träger;
eine Sperrschicht, die ein Polyurethan auf Basis eines aromatischen Isocyanats und eine anorganische Schichtverbindung enthält und die auf einer Oberfläche des Trägers ausgebildet ist; und
eine Überzugsschicht, die einen Polyvinylalkohol oder ein EthylenVinylalkohol-Copolymer und einen metallorganischen Chelatbildner enthält.

2. Die Trägerfolie für ein Bandmaterial gemäß Anspruch 1,
wobei die Überzugsschicht so vorgesehen ist, dass sie mit mindestens einem Teil der Sperrschicht in Kontakt kommt.

3. Die Trägerfolie für ein Bandmaterial gemäß Anspruch 1 oder 2,
wobei der metallorganische Chelatbildner Titanlactat ist.

4. Ein Bandmaterial, umfassend:
die Trägerfolie für ein Bandmaterial gemäß einem der Ansprüche 1 bis 3;
und eine auf der Überzugsschicht ausgebildete Adhäsivschicht.

5. Ein Verfahren zum Herstellen einer Trägerfolie für ein Bandmaterial, umfassend:
Vorbereiten eines aus Polyurethan gebildeten folienförmigen Trägers;
Ausbilden einer Sperrschicht, die ein Polyurethan auf Basis eines aromatischen Isocyanats und eine anorganische Schichtverbindung enthält, auf einer Oberfläche des Trägers; und
Ausbilden einer Überzugsschicht, die einen Polyvinylalkohol oder ein EthylenVinylalkohol-Copolymer und einen metallorganischen Chelatbildner enthält.

6. Das Verfahren zum Herstellen einer Trägerfolie für ein Bandmaterial gemäß Anspruch 5, ferner umfassend
Ausbilden der Überzugsschicht so, dass sie beim Ausbilden der Überzugsschicht mit mindestens einem Teil der Sperrschicht in Kontakt kommt.

## Revendications

1. Un film de support pour un matériau en bande, comprenant :
un support en forme de film formé de polyuréthane ;
une couche barrière, contenant un polyuréthane à base d'isocyanate aromatique et un composé inorganique en couches, et formée sur une surface du support ; et
une couche de revêtement contenant un alcool polyvinylique ou un copolymère d'éthylène-alcool vinylique et un agent chélatant organométallique.

2. Le film de support pour un matériau en bande selon la revendication 1,
dans lequel la couche de revêtement est fournie de manière à entrer en contact avec au moins une partie de la couche barrière.

3. Le film de support pour un matériau en bande selon la revendication 1 ou 2, dans lequel l'agent chélatant organométallique est le lactate de titane.

4. Un matériau en bande, comprenant :
le film de support pour un matériau en bande selon l'une quelconque des revendications 1 à 3 ; et
une couche adhésive formée sur la couche de revêtement.

5. Un procédé de production d'un film de support pour un matériau en bande, comprenant :
préparer un support en forme de film formé de polyuréthane ;
former une couche barrière, contenant un polyuréthane à base d'isocyanate aromatique et un composé inorganique en couches, sur une surface du support ; et
former une couche de revêtement contenant un alcool polyvinylique ou un copolymère d'éthylène-alcool vinylique et un agent chélatant organométallique.

6. Le procédé de production du film de support pour un matériau en bande selon la revendication 5, comprenant en outre
former la couche de revêtement de manière à entrer en contact avec au moins une partie de la couche barrière, lors de la formation de la couche de revêtement.
